# EUROPEAN PATENT SPECIFICATION

(11) **EP 2 292 943 B1**
(45) Date of publication and mention of the grant of the patent: **27.08.2014**
(21) Application number: 10175626.0
(22) Date of filing: 07.09.2010
(51) Int. Cl.: F16D 13/48

(54) **Clutch apparatus**
Kupplungsvorrichtung
Appareil à embrayage

(30) Priority: 08.09.2009 JP 2009206992
(43) Date of publication of application: 09.03.2011
(73) Proprietor: Aisin Seiki Kabushiki Kaisha, Aichi 448-8650 (JP)
(72) Inventor: Hattori, Yasuaki, Kariya-shi Aichi 448-8650 (JP); Kida, Tokiyoshi, Kariya-shi Aichi 448-8650 (JP); Hisaeda, Yusuke, Kariya-shi Aichi 448-8650 (JP)
(74) Representative: Kramer - Barske - Schmidtchen

(56) References cited:
- DE-A1- 4 326 501
- DE-A1- 19 850 552
- FR-A1- 2 834 024
- JP-A- 8 105 457
- US-A- 4 712 659

## Description

### TECHNICAL FIELD

This disclosure relates to a clutch apparatus for connecting and disconnecting a power transmission path between an input shaft and an output shaft so as to transmit and interrupt a transmission of power therebetween. Specifically, this disclosure relates to a clutch apparatus for reducing an operational load.

### BACKGROUND DISCUSSION

A known vehicle includes a clutch apparatus that is arranged at a power transmission path between an engine and a transmission. The clutch apparatus interrupts a transmission of rotational power of the engine to the transmission at the time of a start of the engine, at the time of gear changing, and the like. Further, a clutch-operating force is transmitted to the clutch apparatus in response to a manual operation (a hand-operation, a foot-operation and the like) of an operational mechanism, such as a clutch lever, a clutch pedal and the like, by means of a hydraulic apparatus, a link apparatus and the like. Accordingly, a power transmission path between the engine and the transmission is connected/disconnected. According to JPHB-105457A, a clutch disc is arranged between a flywheel and a pressure plate. Further, the pressure plate is thrust by a biasing force of a diaphragm spring, which is rotatably supported by the clutch cover for integrally rotating the flywheel, thereby connecting a clutch. On the other hand, one end of a clutch release fork, which is pivotally supported by a clutch housing, is thrust by a piston rod, which is attached to the clutch housing and is fitted in a clutch operating cylinder. Consequently, the diaphragm spring is thrust, thereby releasing the connection of the clutch.

According to a conventional clutch apparatus, a principle of leverage is adapted in an operational mechanism to increase a lever ratio, thereby reducing an operational load. Further, in order to further reduce the operational load in the operational mechanism, a clutch apparatus is known, which includes an assist mechanism for assisting an operational force in the operational mechanism.

A pedaling force reducing device for vehicular operation is disclosed in JPH09-315174A. According to JPH09-315174A, an operational pedal is pivotally attached to a vehicle-body side member by means of a shaft. An assist spring is arranged between the operational pedal and the vehicle-body side member that is arranged in front of the operational pedal. The assist spring, configured by a compression spring, applies an assisting force in a direction where the operational pedal is pressed after a pressing of the operational pedal by a predetermined stroke. A pedal side support portion and a vehicle-body side support portion, which respectively include ball portions on ends of shafts thereof, are attached to the operational pedal and the vehicle-body side member, respectively, so that the ball portions face each other. Further, a pedal side bearing pan and a vehicle-body side bearing pan, which include ball-shaped concave portions at centers thereof and spring-bearing surfaces at outer peripherals of the ball-shaped concave portions, are arranged at the pedal side support portion and at a vehicle-body side support portion, respectively, so that the concave portions are fitted to the corresponding ball portions of the pedal side support portion and a vehicle-body side support portion. The assist spring is attached between the spring-bearing surfaces of the pedal side bearing pan and the vehicle-body side bearing pan. In such a state, the spring-bearing surface of the pedal side bearing pan is positioned more rearward than a center of the ball portion of the pedal side support member. The spring-bearing surface of the vehicle-body side bearing pan is positioned more frontward than a center of the ball portion of the vehicle-body side support member. Accordingly, the assist spring for achieving a high output power may be used in a simple configuration. Therefore, a pedal pressing force at the time of pressing the operational pedal may be largely reduced. Further, even when the assist spring for achieving a high output power is adapted, a sudden elevation of the pedal pressing force at the end of release of the operational pedal may be prevented. As a result, a pedal operational feeling may be improved, and the pedal pressing force at the start of the pressing of the operational pedal may be reduced.

A clutch operation mechanism is disclosed in JP2002-181075A. According to JP2002-181075A, the clutch operational mechanism for operating a clutch, mounted on a vehicle, includes an operational-force assisting member for assisting an operational force of a clutch-operating device between the clutch operating device and a vehicle frame. A gas spring serves as the operational-force assisting member. Accordingly, an operator may operate the clutch operating device with a reduced pedal pressing force. Consequently, operational feeling of driving may be improved. Further, a pedal stroke may not necessarily be increased to reduce the pedal pressing force. Therefore, operability may be improved, and an effort for operating the clutch pedal may be mitigated.

However, according to a conventional clutch apparatus, an assist mechanism is provided at an operational mechanism, which is positioned at the most downstream side of a clutch operational path. As a result, a load at a position more upstream side than the operational mechanism in the clutch operational mechanism, and a load at a shaft portion of the operational mechanism (i.e., a load caused by a mechanical sliding resistance), may be increased. Accordingly, load efficiency may be deteriorated and an extra force may be applied. Further, a portion of the clutch operational path positioned closer to the upstream side than the operational mechanism and the shaft portion of the operational mechanism may be required to be structured so as to bear the load of deteriorated load efficiency. As a result, cost of components may increase. Furthermore, in a case where the assist mechanism is provided at a clutch cover (i.e., a clutch cover for pivotally supporting the diaphragm spring) that is positioned at the upstream side of the clutch operational path, there may be a space limitation within a clutch housing for accommodating the clutch apparatus. In a case where a design of the clutch housing is modified so as to accommodate the assist mechanism, a cost may be increased.

A clutch apparatus according to the preamble of claim 1 is disclosed in DE 43 26 501 A1. The first release lever protrudes through the clutch cover and contacts with one side of its end portion the pressure plate. The opposite side of the end portion is pressed by the biasing member towards the pressure plate.

A need exists for a clutch apparatus as to improve a load efficiency of a clutch operational path and to reduce the operational load when engaging/disengaging the clutch.

### SUMMARY

According to an aspect of this disclosure, a clutch apparatus includes a flywheel; a pressure plate arranged to face the flywheel; a clutch disc arranged between the flywheel and the pressure plate; a clutch cover rotating integrally with the flywheel; a first release lever arranged between the pressure plate and the clutch cover and including a first force-input point applied with a load, a first fulcrum point, at which the first release lever is pivotally supported by the clutch cover, and a first force-output point for thrusting the pressure plate toward the flywheel; a biasing member biasing the first release lever, thereby thrusting the pressure plate toward the flywheel by the first release lever at the first force-output point; and an assisting mechanism arranged within the clutch cover and assisting an operational load applied at the first force-input portion of the first release lever against a biasing force of the biasing member. The first release lever is formed into a substantially ring shape. The assisting mechanism includes an assist spring, a first end of which is pivotally supported by the clutch cover and the second end of which is pivotally supported by the first release lever, and which applies a biasing force to the first release lever at least in an outer direction of the radial direction of the first release lever.

According to the embodiment, the clutch apparatus further including a second release lever including a second force-input point applied with an operational load from a release bearing, a second fulcrum point, at which the second release lever is pivotally supported by the clutch cover, and a second force-output point for thrusting the first force-input point of the first release lever in an opposite direction of a biasing direction of the biasing member.

According to the embodiment, the second fulcrum point of the second release lever is arranged on the same circumference of a supporting portion where the first end of the assist spring is pivotally supported by the clutch cover.

According to the embodiment, the second fulcrum point of the second release lever is arranged at a position being more distant from an axis of the clutch cover than a supporting portion where the first end of the assist spring is pivotally supported by the clutch cover.

According to the embodiment, an operational load from a release bearing is applied to the first force-input point of the first release lever. The first release lever includes a relief portion, which is formed not to contact the assist spring, at an intermediate portion of the first release lever in a radial direction thereof. The second end of the assist spring is pivotally supported at the relief portion of the release lever. The first fulcrum point of the first release lever is arranged at a position being more distant from an axis of the clutch cover than a supporting portion where the first end of the assist spring is pivotally supported by the clutch cover.

Accordingly, the assist mechanism 4 for assisting the operational force (a pedal pressing force) is arranged within the clutch cover 20, 30 and 40 that is positioned at the most upstream side of the clutch operational path. Therefore, a load on the clutch operational path at a position more downstream side than the clutch cover 20, 30 and 40 may be reduced. Accordingly, efficiency of a load may be improved. Further, because the load on the clutch operational path at a position more downstream side than the clutch cover 20, 30 and 40 may be reduced, a guarantee load of components (including hydraulic oil in a case where a hydraulic path is adapted) positioned on the clutch operational path at a position more downstream side than the clutch cover 20, 30 and 40 may be reduced. Therefore, a cost may be reduced and a possibility of design may be expanded. Further, the functions are integrated within the clutch cover 20, 30 and 40. Therefore, a space limitation may be overcome. In other words, an additional component is not provided outside the clutch cover 20, 30 and 40. Therefore, a modification of the clutch cover 20, 30 and 40 is not necessary. Accordingly, there is not a space limitation.

### BRIEF DESCRIPTION OF THE DRAWINGS

The foregoing and additional features and characteristics of this disclosure will become more apparent from the following detailed description considered with the reference to the accompanying drawings, wherein:

Fig. 1 is a cross-sectional view schematically illustrating a configuration of a clutch apparatus according to a first embodiment, taken along line I - I of Fig. 2;

Fig. 2 is a planar view schematically illustrating the configuration of the clutch apparatus according to the first embodiment, seen in an axial direction (in a direction L shown in Fig. 1);

Fig. 3 is a diagram illustrating a movement of the clutch apparatus according to the first embodiment;

Fig. 4 is a diagram illustrating a characteristic of a load in a release bearing of the clutch apparatus according to the first embodiment;

Fig. 5 is a cross-sectional view schematically illustrating a configuration of a clutch cover unit of a clutch apparatus according to a second embodiment, taken along line V- V of Fig. 6;

Fig. 6 is a planar view schematically illustrating the configuration of the clutch apparatus according to the second embodiment, seen in an axial direction (in a direction L shown in Fig. 5);

Fig. 7 is a diagram illustrating a movement of the clutch apparatus according to the second embodiment;

Fig. 8 is a cross-sectional view schematically illustrating a configuration of a clutch apparatus according to a third embodiment, taken along line VIII - VIII of Fig. 9;

Fig. 9 is a planar view schematically illustrating the configuration of the clutch apparatus according to the third embodiment, seen in an axial direction (in a direction L shown in Fig. 8); and

Fig. 10 is a diagram illustrating a movement of the clutch apparatus according to the third embodiment.

### DETAILED DESCRIPTION

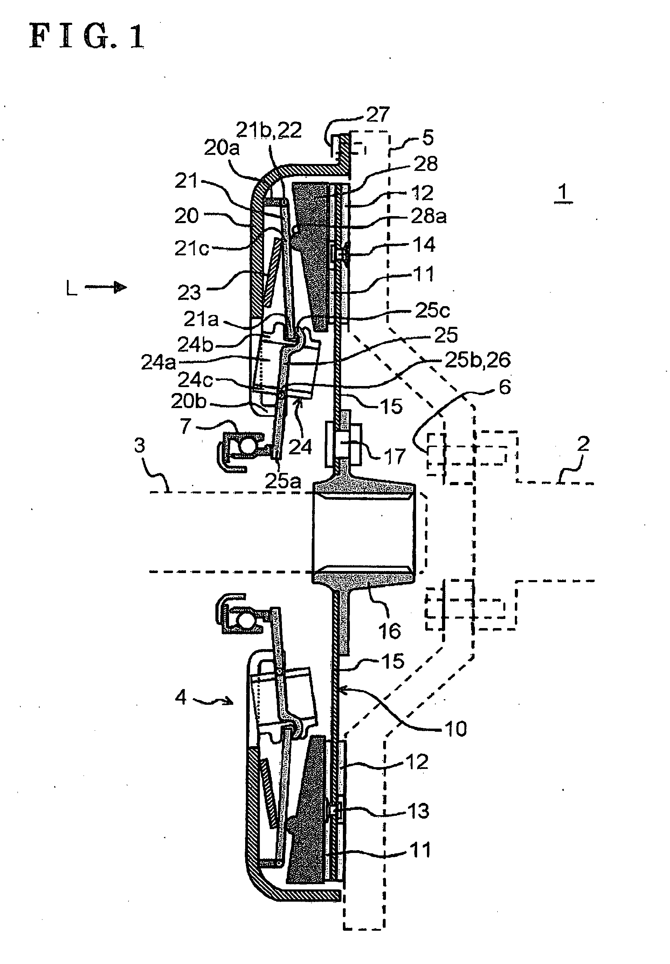

A clutch apparatus according to the first to third embodiments includes: a flywheel (shown by a reference numeral 5 in Fig. 1); a pressure plate (shown by a reference numeral 28 in Fig. 1) arranged to face the flywheel; a clutch disc (shown by a reference numeral 10 in Fig. 1) arranged between the flywheel and the pressure plate; a clutch cover (shown by a reference numeral 20 in Fig. 1) rotated integrally with the flywheel; a release lever (shown by a reference numeral 21 in Fig. 1) arranged between the pressure plate and the clutch cover and having a force-input point (shown by a reference numeral 21a in Fig. 1), to which an operational load is applied, a fulcrum point (shown by reference numeral 21b) pivotally supported by the clutch cover and a force-output point (shown by reference numeral 21c in Fig. 1), at which the pressure plate may be thrust toward the flywheel; a disc spring (shown by reference numeral 23) biasing the release lever so that the point of load of the release lever thrusts the pressure plate toward the flywheel; and an assist mechanism (shown by a reference numeral 4 in Fig. 1) (a mechanism linked to an assist spring 24) arranged within the clutch cover and assisting the operational load, applied to the force-input portion of the release lever, against a biasing force of the disc spring.

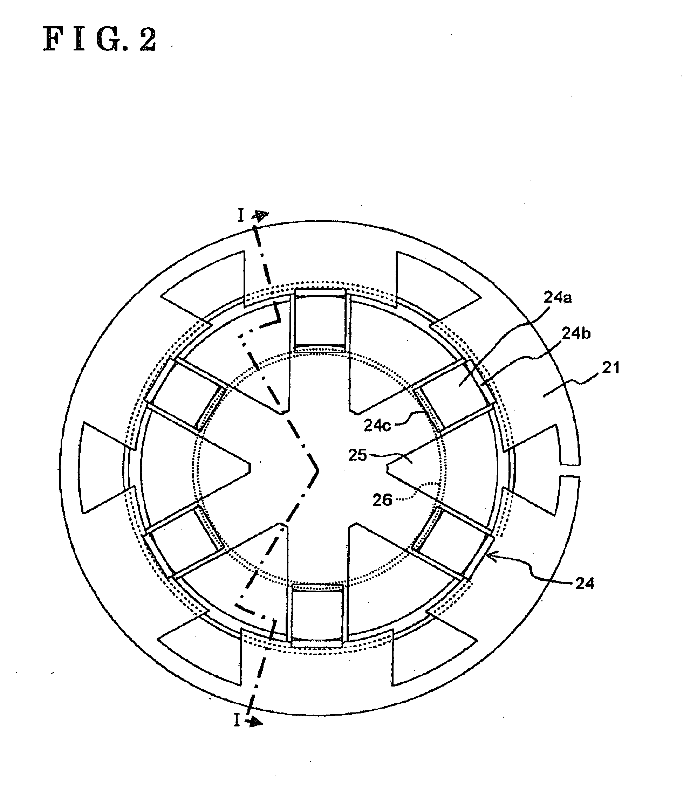

[First embodiment] A clutch apparatus 1 according to a first embodiment will be described hereinafter with reference to the attached drawings. Fig. 1 is a cross-sectional view schematically illustrating a configuration of the clutch apparatus 1 according to the first embodiment, taken along line I - I of Fig. 2. Fig. 2 is a planar view schematically illustrating the configuration of the clutch apparatus 1 according to the first embodiment, seen in an axial direction (in a direction L shown in Fig. 1). Fig. 1 illustrates the clutch apparatus 1 being in an engaged state. Fig. 2 only illustrates a first release lever 21, an assist spring 24, a second release lever 25 and a second supporting member 26 of the clutch apparatus 1.

The clutch apparatus 1 connects and disconnects an input shaft 2 (for example, a crankshaft of an engine) and an output shaft 3 (for example, an input shaft of a transmission) so as to transmit and interrupt a transmission of power therebetween. The clutch apparatus 1 includes an assist mechanism 4 (the mechanism linked to the assist spring 24). The assist mechanism 4 is arranged within the clutch cover 20, which is rotated integrally with the input shaft 2, to assist an operational load. The clutch apparatus 1 is arranged on a power transmission path between the input shaft 2 and the output shaft 3, which are coaxially arranged relative to each other. The clutch apparatus 1 includes a flywheel 5, a release bearing 7, a clutch disc 10, the clutch cover 20, the first release lever 21, a first supporting member 22, a disc spring 23, the assist spring 24, the second release lever 25, the second supporting member 26 and a pressure plate 28.

The flywheel 5 is made from cast iron and is formed into a substantially disc shape. The flywheel 5 is fixed to the input shaft 2 by means of first bolts 6 so as to be rotated integrally therewith. The clutch cover 20 is fixed to the flywheel 5 at an outer portion in a radial direction thereof on a surface facing the output shaft 3 (a left side surface of Fig. 1) by means of bolts 27, so that the flywheel 5 is rotated integrally with the clutch cover 20. In a state where the clutch disc 10 is thrust toward the flywheel 5 by the pressure plate 28, an intermediate portion of the flywheel 5 in the radial direction thereof on the surface facing the output shaft 3 (the left side surface of Fig. 1) is press-fitted to (or, slidably press-contacts, in a case where a thrusting force is small) a second friction member 12 of the clutch disc 10.

The release bearing 7 is configured by a ball bearing and formed into a substantially ring shape. The release bearing 7 is arranged around an outer circumference of the output shaft 3. The release bearing 7 is movable in an axial direction (a right-left direction of Fig. 1) in response to a manual operation (a hand operation, foot operation and the like) of an operational portion, such as a clutch lever, a clutch pedal and the like by use of a hydraulic mechanism, a link mechanism and the like. As illustrated in Fig. 1, the release bearing 7 includes an outer ring, an inner ring and balls therebetween. When the outer ring is operated by the hydraulic mechanism, the link mechanism and the like so as to be moved in the axial direction, the inner ring is rotated integrally with the second release lever 25.

The clutch disc 10, formed into a substantially disc shape, transmits a rotational force of the input shaft 2 to the output shaft 3. In the clutch disc 10, a first friction member 11 and the second friction member 12 are respectively fixed to a disc plate 15, formed into a substantially disc shape, at an outer portion of the disc plate 15 in a radial direction thereof on both surfaces of the disc plate 15 by means of first and second rivets 13 and 14. Further, an inner portion of the disc plate 15 in the radial direction thereof is fixed to an outer portion of a hub member 16 by means of third rivets 17. An inner portion of the hub member 16 is spline-engaged with the output shaft 3 so that a relative rotation therebetween is restricted and so that a relative movement therebetween in the axial direction is allowed. The clutch disc 10 is arranged between the flywheel 5 and the pressure plate 28. In a state where the disc plate 10 is trust toward the flywheel 5 by the pressure plate 28, the pressure plate 28 and the first friction member 11 are press-fitted to each other (or, slidably contact each other in a case where the thrusting force is small), and the flywheel 5 and the second friction member 12 are press-fitted to each other (or, slidably contact each other in a case where the thrusting force is small). The clutch disc 10 may include a mechanism for absorbing a torque fluctuation between the input shaft 2 and the output shaft 3.

The clutch cover 20, formed into a substantially ring shape, pivotally supports the first release lever 21 and the second release lever 25. An outer portion of the clutch cover 20 in a radial direction thereof is fixed to the flywheel 5 by means of the second bolts 27 so as to be rotated integrally therewith. An inner portion of the clutch cover 20 in the radial direction thereof is spaced away from the flywheel 5. The clutch cover 20 includes a first supporting portion 20a at a portion of the clutch cover 20 being more outer than the disc spring 23 in the radial direction of the clutch cover 20. The first supporting portion 20a supports the first supporting member 22 for pivotally supporting a first fulcrum portion (a first fulcrum point) 21b of the first release lever 21. The clutch cover 20 further includes a second supporting portion 20b at a portion of the clutch cover 20 being more inner than the disc spring 23 in the radial direction of the clutch cover 20. The second supporting portion 20b supports the second supporting member 26 for pivotally supporting a second fulcrum portion (a second fulcrum point) 25b of the second release lever 25 and a second seat 24c of the assist spring 24. The clutch cover 20 supports an inner circumferential end of the disc spring 23. The clutch cover 20 is configured so as not to contact the second release lever 25 and the assist spring 24 when the second release lever 25 and the assist spring 24 are pivotally moved.

The first release lever 21 is formed into a substantially ring shape. The first release lever 21 is pivotally supported by the clutch cover 20. The first release lever 21 is arranged between the pressure plate 28 and the disc spring 23. The first release lever 21 includes a first force-input portion (a first force-input point) 21a at an inner portion in a radial direction thereof on a surface facing the pressure plate 28. A thrusting force from a second force-output portion (a second force-output point) 25c of the second release lever 25 is applied to the first force-input portion 21a of the first release lever 21. The first release lever 21 includes the first fulcrum portion 21b at an outer end portion in the radial direction thereof. The first fulcrum portion 21b is pivotally supported by the first supporting member 22. The first release lever 21 includes a first force-output portion (a first force-output point) 21c at an intermediate portion in the radial direction thereof on a surface facing the pressure plate 28. The first force-output portion 21c contacts a protruding portion 28a of the pressure plate 28. The intermediate portion of the first release lever 21 on an opposite surface of the surface facing the pressure plate 28 is biased toward the pressure plate 28 by the disc spring 23. When the first release lever 21 is biased by the disc spring 23, the inner portion of the first release lever 21 in the radial direction thereof is pivotally moved about the first fulcrum portion 21b toward the pressure plate 28, thereby biasing the protruding portion 28a of the pressure plate 28 by the first force-output portion 21c. On the other hand, when the first force-input portion 21a of the first release lever 21 is thrust by the second force-output portion 25c of the second release lever 25, the inner portion of the first release lever 21 in the radial direction thereof is pivotally moved about the first point of first fulcrum portion 21b in an opposite direction from the pressure plate 28, thereby compressing the disc spring 23. Consequently, the biasing of the protruding portion 28a of the pressure plate 28 by the first force-output portion 21c of the first release lever 21 is released.

An inner end portion of the first release lever 21 in the radial direction thereof is pivotally supported by a first seat 24b of the assist spring 24 at a position being displaced from the second release lever 25 in a circumferential direction of the first release lever 21. The first release lever 21 receives a component of a thrusting force at least in the outer direction of the radial direction the first release lever 21 from the assist spring 24 in accordance with an inclining degree of the assist spring 24. Therefore, when the first release lever 21 is pivotally moved about the first fulcrum portion 21b toward the disc spring 23 from a state where the first release lever 21 (a line (a surface) connecting the first force-input portion 21a and the first fulcrum portion 21b) and a line (a surface) connecting the first supporting member 22 and the second supporting member 26 correspond to each other (become parallel to each other) (a turnover point), a thrusting force of the assist spring 24 is applied to the first release lever 21 so that the first release lever 21 is pivotally moved toward the disc spring 23. On the other hand, when the first release lever 21 is pivotally moved about the first fulcrum portion 21b toward the pressure plate 28 from a state where the first release lever 21 (a line (a surface) connecting the first force-input portion 21a and the first fulcrum portion 21b) and a line (a surface) connecting the first supporting member 22 and the second supporting member 26 correspond to each other (become parallel to each other) (a turnover point), a thrusting force of the assist spring 24 is applied to the first release lever 21 so that the first release lever 21 is pivotally moved toward the pressure plate 28.

The first supporting member 22 pivotally supports the first release lever 21 at the first fulcrum portion 21b. The first supporting member 22 is supported by the first supporting portion 20a of the clutch cover 20.

The disc spring (a biasing member) 23, formed into a substantially coned shape, biases the first release lever 21 so that the first force-output portion 21c of the first release lever 21 thrusts the pressure plate 28 toward the flywheel 5. The disc spring 23 is arranged between the clutch cover 20 and first release lever 21. The inner circumferential end of the disc spring 23 is supported by the clutch cover 20 and an outer circumferential end of the disc spring 23 thrusts the first release lever 21 toward the pressure plate 28. When the disc spring 23 biases the first release lever 21, the first release lever 21 is pivotally moved about the first fulcrum portion 21b toward the pressure plate 28.

The assist spring 24 for configuring the assist mechanism 4 assists an operational load that is applied to the first force-input portion 21a of the first release lever 21 against the biasing force of the disc spring 23. The assist spring 24 is arranged at a position being displaced from the second release lever 25 in a circumferential direction of the second release lever 25. The assist spring 24 is arranged between an inner end portion of the first release lever 21 in the radial direction thereof and the second supporting member 26 so as to be expanded and compressed. The assist spring 24 applies a component of a biasing force at least in the outer direction of the radial direction of the first release lever 21 to the inner end portion of the first release lever 21 in the radial direction thereof in accordance with an inclining degree of the assist spring 24. The assist spring 24 is configured by the first and second seats 24b and 24c and a spring 24a (for example, a coil spring or an elastic member) that is arranged between the first and second seats 24b and 24c. The first seat 24b is pivotally supported by the inner circumferential end portion of the first release lever 21. The second seat 24c is pivotally supported by the second supporting member 26. When the first release lever 21 is pivotally moved about the first fulcrum portion 21b toward the disc spring 23 from a state where the second force-output portion 25c of the second release lever 25 thrusts the first force-input portion 21a of the first release lever 21 and where the first release lever (a line (a surface) connecting the first force-input portion 21a and the first fulcrum portion 21b) and a line (a surface) connecting the first supporting member 22 and the second supporting member 26 correspond to each other (become parallel to each other) (a turnover point), the assist spring 24 assists the first release lever 21 so that the first release lever 21 is pivotally moved about the first fulcrum portion 21b toward the disc spring 23.

The second release lever 25 is formed into a substantially ring shape. The second release lever 25 is pivotally supported by the clutch cover 20. The second release lever 25 is arranged at a position being displaced from the assist spring 24 in a circumferential direction of the second release lever 25. The second release lever 25 includes a second force-input portion (a second force-input point) 25a at an inner portion thereof in a radial direction thereof on a surface thereof facing the release bearing 7. A thrusting force of the release bearing 7 is applied to the second force-input portion 25a. The second release lever 25 further includes the second fulcrum portion 25b, which is pivotally supported by the second supporting member 26, at an intermediate portion of the second release lever 25 in the radial direction thereof. The second release lever 25 further includes the second force-output portion 25c at an outer portion thereof in the radial direction thereof. The second force-output portion 25c thrusts the first force-input portion 21a of the first release lever 21. When the second force-input portion 25a of the second release lever 25 is thrust by the release bearing 7 toward a side of the input shaft 2, the second release lever 25 is pivotally moved about the second fulcrum portion 25b, thereby thrusting the first force-input portion 21a of the first release lever 21 by the second force-output portion 25c of the second release lever 25.

The second supporting member 26 pivotally supports the second release lever 25 about the second fulcrum portion 25b. The second supporting member 26 is supported by the second supporting portion 20b of the clutch cover 20. The second supporting member 26 pivotally supports the second seat 24c of the assist spring 24 at a position being displaced from the second release lever 25 in the circumferential direction of the second release lever 25.

The pressure plate 28 thrusts the clutch disc 10 toward the flywheel 5 so as to sandwich the clutch disc 10 between the pressure plate 28 and the flywheel 5, thereby frictionally-engaging the clutch disc 10 with the flywheel 5 so that the clutch disc 10 is rotated integrally with the flywheel 5. The pressure plate 28 is arranged to face the flywheel 5 via the clutch disc 10. The pressure plate 28 is connected to the clutch cover 20 by means of straps so as to be rotated integrally with the clutch cover 20. The pressure plate 28 includes the protruding portion 28a, which the first force-output portion 21c of the first release lever 21 contact. When the pressure plate 28 is thrust toward the flywheel 5 by the first release lever 21, the pressure plate 28 is press-fitted (or, slidably press-contacts, in a case where a thrusting force is small) with the first friction member 11.

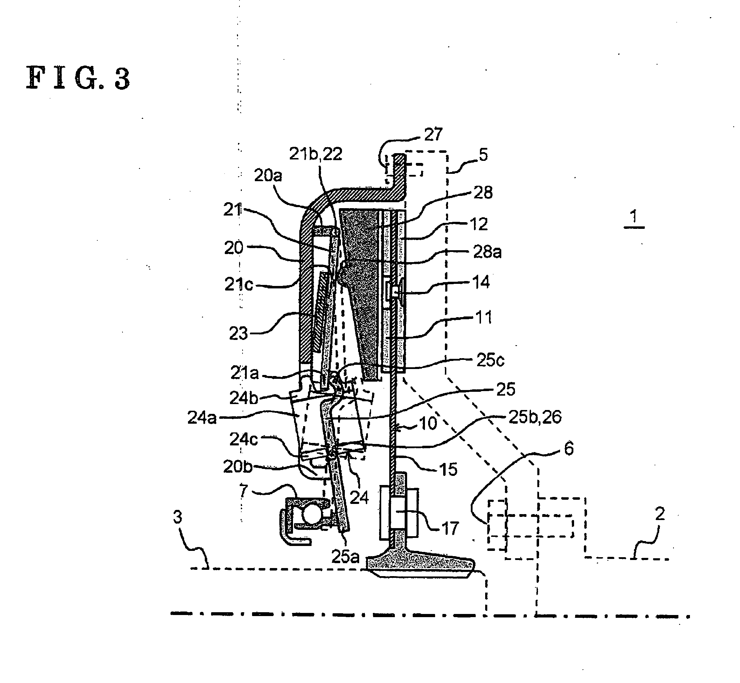

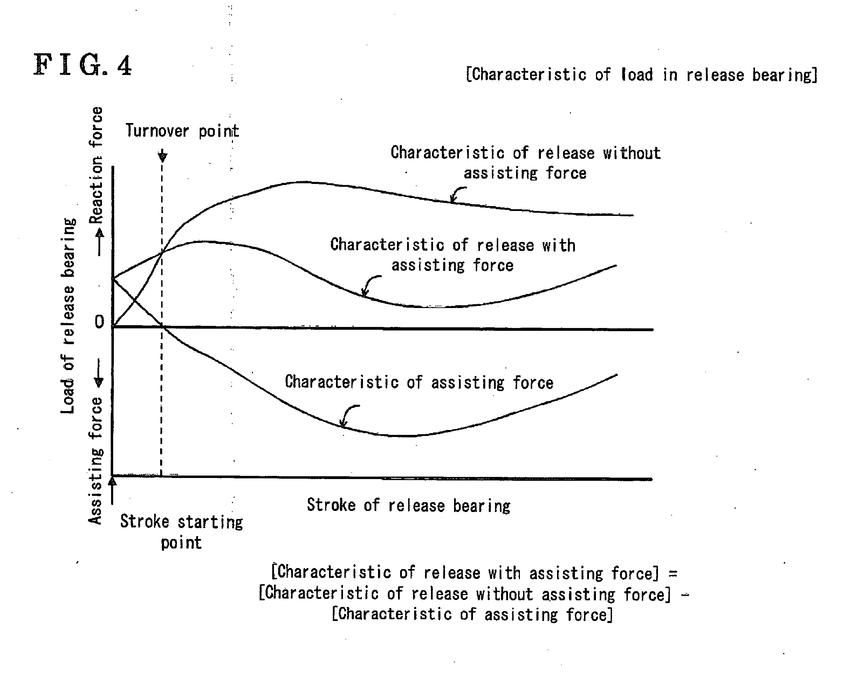

A movement of the clutch apparatus 1 according to the first embodiment will be described hereinafter with reference to the attached drawings. Fig. 3 is a diagram illustrating a movement of the clutch apparatus 1 according to the first embodiment. Fig. 4 is a diagram illustrating a characteristic of a load in the release bearing 7 of the clutch apparatus 1 according to the first embodiment. Fig. 3 illustrates the clutch apparatus 1 being in a disengaged state (a dashed line of Fig. 3 illustrates the engaged state of the clutch apparatus 1).

As illustrated in Fig. 1, in the engaged state of the clutch apparatus 1 (a state where the operational portion, such as the clutch lever, the clutch pedal, is not being operated), the pressure plate 28 is press-fitted with the clutch disc 10. Therefore, a rotational force is transmitted from the input shaft 2 to the output shaft 3. The press-fitting force is generated by the disc spring 23 and the assist spring 24. A load, generated by the disc spring 23, is transmitted to the pressure plate 28 via the first release lever 21. A load, generated by the assist spring 24, is transmitted to the pressure plate 28 after a component of the load in a rotational direction of the first release lever 21 about the first fulcrum portion 21b is increased in accordance with a lever ratio of the first release lever 21.

As illustrated in Fig. 3, when the operational portion, such as the clutch lever and the clutch pedal, is operated (a hand operation, foot operation and the like) during the engaged state of the clutch apparatus 1, the release bearing 7 is moved in a right direction of Fig. 3 by means of the hydraulic mechanism, the link mechanism and the like. Consequently, the second force-input portion 25a of the second release lever 25 is thrust toward the side of the input shaft 2 by the release bearing 7, thereby pivotally moving the second release lever 25 about the second supporting portion 25b. Accordingly, the second force output portion 25c of the second release lever 25 thrusts the first force-input portion 21a of the first release lever 21 toward the disc spring 23 due to a principle of leverage. When the first force-input portion 21a of the first release lever 21 is thrust by a force being larger than the biasing force of the disc spring 23, the first release lever 21 is pivotally moved about the first fulcrum portion 21b toward the disc spring 23. At the same time, the disc spring 23 is compressed, and the biasing of the protruding portion 28a of the pressure plate 28 by the first force-output portion 21c of the first release lever 21 is released due to the principle of leverage. Consequently, the pressure plate 28 is moved in a left direction of Fig. 3, thereby releasing the pressure plate 28 from press-fitting to the clutch disc 10. Accordingly, the transmission of the rotational force from the input shaft 2 to the output shaft 3 is interrupted. As a result, the clutch apparatus 1 becomes the disengaged state. Herein, when the second force-output portion 25c of the second release lever 25 thrusts the first force-input portion 21a of the first release lever 21, the thrusting force of the assist spring 24 serves as a reaction force against the thrusting force of the second force-output portion 25c of the second release lever 25 until the first lever 21 a line (a surface) connecting the first force-input portion 21a and the first fulcrum portion 21b) and a line (a surface) connecting the first supporting member 22 and the second supporting member 26 correspond to each other (become parallel to each other) (a turnover point). However, after the first release lever 21 passes the turnover point, the thrusting force of the assist spring 24 serves as an assisting force of the second force-output portion 25c of the second release lever 25. Therefore, after the first release lever 21 is pivotally moved toward the disc spring 23 to pass the turnover point, a load on a clutch operational path at a position more downstream side than the first release lever 21 may be reduced.

A characteristic of a load in the release bearing 7 when the first release lever 21 is pivotally moved toward the disc spring 23 to pass the turnover point, is shown in "characteristic of release with assisting force" in Fig. 4. "Characteristic of release with assisting force" is defined by subtracting "characteristic of assisting force" from "characteristic of release without assisting force". "Characteristic of release without assisting force" shows a characteristic of a load in the release bearing 7 when the assist spring 24 is removed from the configuration shown in Fig. 1. "Characteristic of assisting force" shows a characteristic of a load in the release bearing 7 only when a load of the assist spring 24 is applied.

When an operation (a hand-operation, a foot-operation and the like) of the operational portion, such as the clutch lever, clutch pedal and the like, is released during the disengaged state of the clutch apparatus 1, the first release lever 21 is pivotally moved about the first fulcrum portion 21b toward the pressure plate 28 by means of the biasing force of the disc spring 23. Consequently, the first force-output portion 21c of the first release lever 21 thrusts the protruding portion 28a of the pressure plate 28. Further, the first force-input portion 21a of the first release lever 21 thrusts the second force-output portion 25c of the second release lever 25 toward the pressure plate 28. Accordingly, the clutch apparatus 1 is switched to a half-engaged state, and then, to the engaged state. Herein, when the first force-input portion 21a of the first release lever 21 thrusts the second force-output portion 25c of the second release lever 25, the thrusting force of the assist spring 24 serves as a reaction force before the turnover point. However, after the turnover point, the thrusting force of the assist spring 24 serves as the assisting force of the thrusting force of the first force-output portion 21c of the first release lever 21. When the second force-output portion 25c of the second release lever 25 is thrust toward the pressure plate 28, the second release lever 25 is pivotally moved about the second fulcrum portion 25b. Consequently, the release bearing 7 is moved in the left direction of Fig. 3 by the second force-input portion 25a of the second release lever 25.

According to the first embodiment, the assist mechanism 4 (the mechanism linked to the assist spring 24) for assisting the operational force is arranged within the clutch cover 20 that is positioned at the most upstream side of the clutch operational path. Therefore, a load on the clutch operational path at a position more downstream side than the clutch cover 20 may be reduced. Accordingly, efficiency of a load may be improved. Further, because the load on the clutch operational path at a position more downstream side than the clutch cover 20 may be reduced, a guarantee load of components positioned on the clutch operational path at a position more downstream side than the clutch cover 20 may be reduced. Therefore, a cost may be reduced and a possibility of design may be increased. Further, the functions are integrated within the clutch cover 20. Therefore, a space limitation may be overcome.

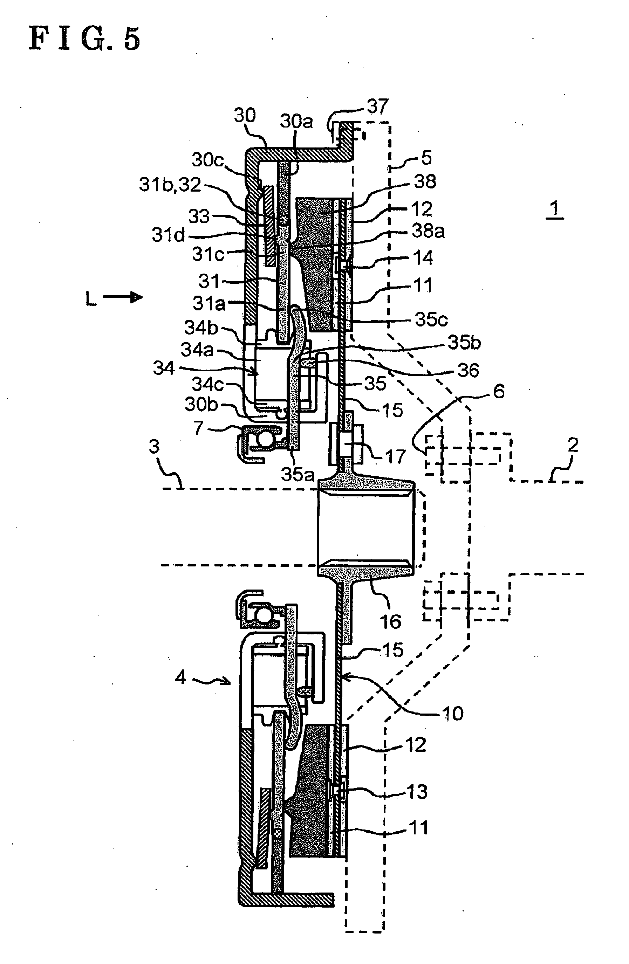

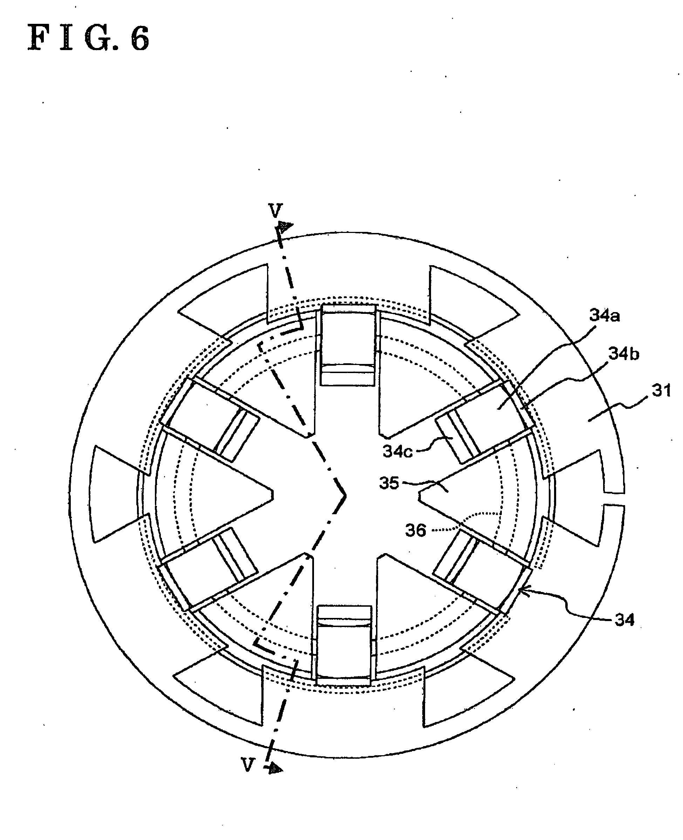

[Second embodiment] A clutch apparatus 1 according to a second embodiment will be described hereinafter with reference to the attached drawings. Fig. 5 is a cross-sectional view schematically illustrating a configuration of a clutch cover unit of the clutch apparatus 1 according to the second embodiment, taken along line V - V of Fig. 6. Fig. 6 is a planar view schematically illustrating the configuration of the clutch apparatus 1 according to the second embodiment, seen in an axial direction (in a direction L shown in Fig. 5). Fig. 5 illustrates the clutch apparatus 1 being in an engaged state. Fig. 6 only illustrates a first release lever 31, an assist spring 34, a second release lever 35 and a second supporting member 36 of the clutch apparatus 1. In the second embodiment, configurations similar to the first embodiment may be referred to by the same reference numerals and a detailed description thereof will be omitted.

In the first embodiment, the second fulcrum portion 25b of the second release lever 25 and an inner supporting portion of the assist spring 24 (a supporting portion of the second seat 24c) are arranged on the same circumference. However, according to the second embodiment, a second supporting portion 35b of the second release lever 35 and an inner supporting portion of the assist spring 34 (a supporting portion of a second seat 34c) are not arranged on the same circumference. More specifically, the second supporting portion 35b of the second release lever 35 is arranged at a position being more distant from an axis of the clutch cover 30 than the inner supporting portion of the assist spring 34 (a supporting portion of a second seat 34c).

The clutch apparatus 1 connects and disconnects an input shaft 2 (for example, a crankshaft of an engine) and an output shaft 3 (for example, an input shaft of a transmission) so as to transmit and interrupt a transmission of power therebetween. The clutch apparatus 1 includes an assist mechanism 4 (the mechanism linked to an assist spring 34). The assist mechanism 4 is arranged within the clutch cover 30, which is rotated integrally with the input shaft 2, to assist an operational load. The clutch apparatus 1 is arranged on a power transmission path between the input shaft 2 and the output shaft 3, which are coaxially arranged relative to each other. The clutch apparatus 1 includes a flywheel 5, a release bearing 7, a clutch disc 10, the clutch cover 30, the first release lever 31, a first supporting member 32, a disc spring 33, the assist spring 34, the second release lever 35, the second supporting member 36 and a pressure plate 38. The configuration of the flywheel 5, the release bearing 7 and the clutch disc 10 are the same as the first embodiment.

The clutch cover 30, formed into a substantially ring shape, pivotally supports the first release lever 31 and the second release lever 35. An outer portion of the clutch cover 30 in a radial direction thereof is fixed to the flywheel 5 by means of the second bolts 37 so as to be rotated integrally therewith. An inner portion of the clutch cover 30 in the radial direction thereof is spaced away from the flywheel 5. The clutch cover 30 includes a first supporting portion 30a at an outer portion of the clutch cover 30 in the radial direction thereof. The first supporting portion 30a supports the first supporting member 32 for pivotally supporting a first fulcrum portion (a first fulcrum point) 31b of the first release lever 31. The clutch cover 30 further includes a second supporting portion 30b at an inner portion of the clutch cover 30 in the radial direction of thereof. The second supporting portion 30b supports the second supporting member 36 for pivotally supporting the second supporting portion 35b of the second release lever 35. The clutch cover 30 pivotally supports the second seat 34c of the assist spring 34. The clutch cover 30 includes a first protruding portion 30c for supporting an inner circumferential end of the disc spring 33. The clutch cover 30 is configured so as not to contact the second release lever 35 and the assist spring 34 when the second release lever 35 and the assist spring 34 are pivotally moved.

The first release lever 31 is formed into a substantially ring shape. The first release lever 31 is pivotally supported by the clutch cover 30. The first release lever 31 is arranged between the pressure plate 38 and the disc spring 33. The first release lever 31 includes a first force-input portion (a first force-input point) 31a at an inner portion thereof in a radial direction thereof on a surface thereof facing the pressure plate 38. A thrusting force from a second force-output portion 35c of the second release lever 35 is applied to the first force-input portion 31a of the first release lever 31. The first release lever 31 includes the fulcrum portion 41b at an outer end portion thereof in the radial direction thereof. The fulcrum portion 41b is pivotally supported by the first supporting member 32. The first release lever 31 includes a first force-output portion (a first force-output point) 31c at an intermediate portion thereof in the radial direction thereof on a surface thereof facing the pressure plate 38. The first force-output portion 31c contacts a second protruding portion 38a of the pressure plate 38. The first release lever 31 includes a third protruding portion 31d at an intermediate portion of the first release lever 31 on an opposite surface of the surface facing the pressure plate 38. The third protruding portion 31d is biased toward the pressure plate 38 by the disc spring 33. When the first release lever 31 is biased by the disc spring 33, the inner portion of the first release lever 31 in the radial direction thereof is pivotally moved about the fulcrum portion 41b toward the pressure plate 38, thereby biasing the second protruding portion 38a of the pressure plate 38 by the first force-input portion 31c. On the other hand, when the first force-input portion 31a of the first release lever 31 is thrust by the second force-output portion 35c of the second release lever 35, the inner portion of the first release lever 31 in the radial direction thereof is pivotally moved about the first fulcrum portion 31b in an opposite direction from the pressure plate 38, thereby compressing the disc spring 33. Consequently, the biasing of the second protruding portion 38a of the pressure plate38 by the first force-output portion 31c of the first release lever 31 is released.

An inner end portion of the first release lever 31 in the radial direction thereof is pivotally supported by a first seat 34b of the assist spring 34 at a position being displaced from the second release lever 35 in a circumferential direction of the first release lever 31. The first release lever 31 receives a component of a thrusting force at least in the outer direction of the radial direction the first release lever 31 from the assist spring 34 in accordance with an inclining degree of the assist spring 34. Therefore, when the first release lever 31 is pivotally moved about the first fulcrum portion 31b toward the disc spring 33 from a state where the first release lever 31 (a line (a surface) connecting the first force-input portion 31a and the fulcrum portion 41b) and a line (a surface) connecting the first supporting member 32 and the first supporting member 32 correspond to each other (become parallel to each other) (a turnover point), a thrusting force of the assist spring 34 is applied to the first release lever 31 so that the first release lever 31 is pivotally moved toward the disc spring 33. On the other hand, when the first release lever 31 is pivotally moved about the fulcrum portion 41b toward the pressure plate 38 from a state where the first release lever 31 (a line (a surface) connecting the first force-input portion 31a and the fulcrum portion 41b) and a line (a surface) connecting the first supporting member 32 and the supporting portion of the second seat 34c of the assist spring 34 correspond to each other (become parallel to each other) (a turnover point), a thrusting force of the assist spring 34 is applied to the first release lever 31 so that the first release lever 31 is pivotally moved toward the pressure plate 38.

The first supporting member 32 pivotally supports the first release lever 31 at the fulcrum portion 41b. The first supporting member 32 is supported by the first supporting portion 30a of the clutch cover 30.

The disc spring (a biasing member) 33, formed into a substantially coned shape, biases the first release lever 31 so that the first force-output portion 31c of the first release lever 31 thrusts the pressure plate 38 toward the flywheel 5. The disc spring 33 is arranged between the clutch cover 30 and first release lever 31. The inner circumferential end of the disc spring 33 is supported by the first protruding portion 30c of the clutch cover 30 and an outer circumferential end of the disc spring 33 thrusts the third protruding portion 31d of the first release lever 31 toward the pressure plate 38. When the disc spring 33 biases the first release lever 31, the first release lever 31 is pivotally moved about the first fulcrum portion 31b toward the pressure plate 38.

The assist spring 34 for configuring the assist mechanism 4 assists an operational load that is applied to the first force-input portion 31a of the first release lever 31 against the biasing force of the disc spring 33. The assist spring 34 is arranged at a position being displaced from the second release lever 35 in a circumferential direction of the second release lever 35. The assist spring 34 is arranged between an inner end portion of the first release lever 31 in the radial direction thereof and the inner supporting portion (the supporting portion of a second seat 34c) of the assist spring 34 so as to be expanded and compressed. The assist spring 34 applies a component of a biasing force at least in the outer direction of the radial direction of the first release lever 31 to the inner end portion of the first release lever 31 in the radial direction thereof in accordance with an inclining degree of the assist spring 34. The assist spring 34 is configured by the first and second seats 34b and 34c and a spring 34a (for example, a coil spring or an elastic member) that is arranged between the first and second seats 34b and 34c. The first seat 34b pivotally supports the inner circumferential end portion of the first release lever 31. The second seat 34c is pivotally supported by the second supporting portion 30b of the clutch cover 30. When the first release lever 31 is pivotally moved about the fulcrum portion 41b toward the disc spring 33 from a state where the second force-output portion 35c of the second release lever 35 thrusts the first force-input portion 31a of the first release lever 31 and where the first release lever (a line (a surface) connecting the first force-input portion 31a and the fulcrum portion 41 b) and a line (a surface) connecting the first supporting member 32 and the supporting portion of a second seat 34c correspond to each other (become parallel to each other) (a turnover point), the assist spring 34 assists the first release lever 31 so that the first release lever 31 is pivotally moved about the fulcrum portion 41b toward the disc spring 33.

The second release lever 35 is formed into a substantially ring shape. The second release lever 35 is pivotally supported at the clutch cover 30 by means of the second supporting member 36. The second release lever 35 is arranged at a position being displaced from the assist spring 34 in a circumferential direction of the second release lever 35. The second release lever 35 includes a second force-input portion 35a at an inner portion thereof in a radial direction thereof on a surface thereof facing the release bearing 7. A thrusting force of the release bearing 7 is applied to the second force-input portion 35a. The second release lever 35 further includes the second supporting portion 35b, which is pivotally supported by the second supporting member 36, at an intermediate portion of the second release lever 35 in the radial direction thereof. The second release lever 35 further includes the second force-output portion 35c at an outer portion thereof in the radial direction thereof. The second force-output portion 35c thrusts the first force-input portion 31a of the first release lever 31. When the second force-input portion 35a of the second release lever 35 is thrust by the release bearing 7 toward a side of the input shaft 2, the second release lever 35 is pivotally moved about the second supporting portion 35b, thereby thrusting the first force-input portion31a of the first release lever 31 by the second force-output portion 35c of the second release lever 35.

The second supporting member 36 pivotally supports the second release lever 35 about the second supporting portion 35b. The second supporting member 36 is supported by the second supporting portion 30b of the clutch cover 30.

The pressure plate 38 thrusts the clutch disc 10 toward the flywheel 5 so as to sandwich the clutch disc 10 between the pressure plate 38 and the flywheel 5, thereby frictionally-engaging the clutch disc 10 with the flywheel 5 so that the clutch disc 10 is rotated integrally with the flywheel 5. The pressure plate 38 is arranged to face the flywheel 5 via the clutch disc 10. The pressure plate 38 is connected to the clutch cover 30 by means of straps so as to be rotated integrally with the clutch cover 30. The pressure plate 38 includes the second protruding portion 38a, which the first force-output portion 31c of the first release lever 31 contact. When the pressure plate 38 is thrust toward the flywheel 5 by the first release lever 31, the pressure plate 38 is press-fitted (or, slidably press-contacts, in a case where a thrusting force is small) with the first friction member 11.

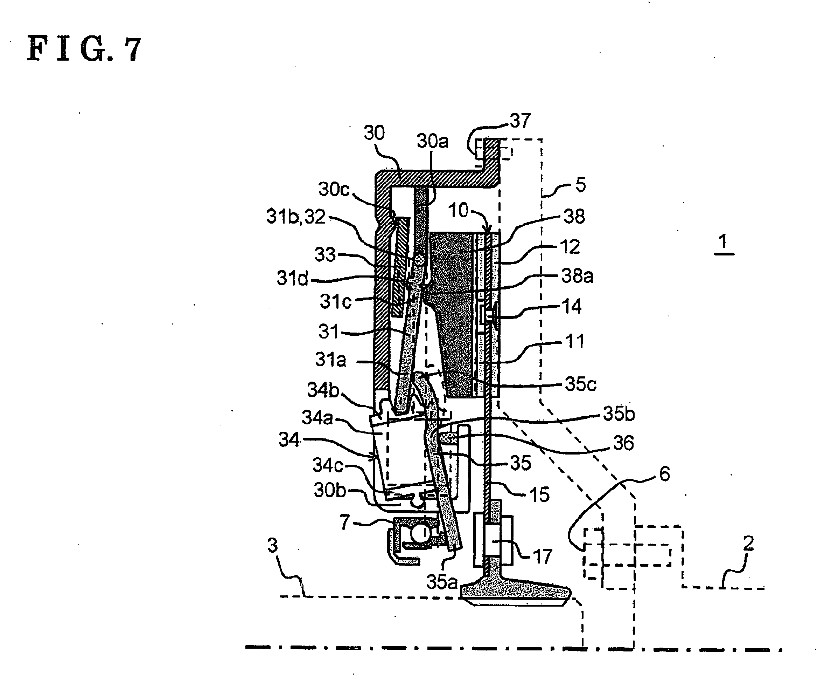

A movement of the clutch apparatus 1 according to the second embodiment will be described hereinafter with reference to the attached drawings. Fig. 7 is a diagram illustrating a movement of the clutch apparatus 1 according to the second embodiment. Fig. 7 illustrates the clutch apparatus 1 being in a disengaged state (a dashed line of Fig. 7 illustrates the engaged state of the clutch apparatus 1).

As illustrated in Fig. 5, in the engaged state of the clutch apparatus 1 (a state where the operational portion, such as the clutch lever, the clutch pedal, is not being operated), the pressure plate 38 is press-fitted with the clutch disc 10. Therefore, a rotational force is transmitted from the input shaft 2 to the output shaft 3. A press-fitting force is generated by the disc spring 33 and the assist spring 34. A load, generated by the disc spring 33, is transmitted to the pressure plate 38 via the first release lever 31. A load, generated by the assist spring 34, is transmitted to the pressure plate 38 after a component of the load in a rotational direction of the first release lever 31 about the fulcrum portion 41b is increased in accordance with a lever ratio of the first release lever 31.

As illustrated in Fig. 7, when the operational portion, such as the clutch lever and the clutch pedal, is operated (a hand operation, foot operation and the like) during the engaged state of the clutch apparatus 1, the release bearing 7 is moved in a right direction of Fig. 7 by means of the hydraulic mechanism, the link mechanism and the like. Consequently, the second force-input portion 35a of the second release lever 35 is thrust toward the side of the input shaft 2 by the release bearing 7, thereby pivotally moving the second release lever 35 about the second supporting portion 35c. Accordingly, the second force-output portion 35c of the second release lever 35 thrusts the first force-input portion 31a of the first release lever 31 toward the disc spring 33 due to a principle of leverage. When the first force-input portion 31a of the first release lever 31 is thrust by a force being larger than the biasing force of the disc spring 33, the first release lever 31 is pivotally moved about the fulcrum portion 41b toward the disc spring 33. At the same time, the disc spring 33 is compressed, and the biasing of the second protruding portion 38a of the pressure plate 38 by the first force-output portion 31c of the first release lever 31 is released due to the principle of leverage. Consequently, the pressure plate 38 is moved in a left direction of Fig.7, thereby releasing the pressure plate 38 from press-fitting to the clutch disc 10. Accordingly, the transmission of the rotational force from the input shaft 2 to the output shaft 3 is interrupted. As a result, the clutch apparatus 1 becomes the disengaged state. Herein, when the second force-output portion35c of the second release lever 35 thrusts the first force-input portion 31a of the first release lever 31, the thrusting force of the assist spring 34 serves as a reaction force against the thrusting force of the second force-output portion 35c of the second release lever 35 until the first lever 31 a line (a surface) connecting the first force-input portion 31a and the fulcrum portion 41b) and a line (a surface) connecting the first supporting member 32 and the second seat 34c of the assist spring 34 correspond to each other (become parallel to each other) (a turnover point). However, after the first release lever 31 passes the turnover point, the thrusting force of the assist spring 34 serves as an assisting force of the second force-output portion 35c of the second release lever 35. Therefore, after the first release lever 31 is pivotally moved toward the disc spring 33 to pass the turnover point, a load on a clutch operational path at a position more downstream side than the first release lever 31 may be reduced.

When an operation (a hand-operation, a foot-operation and the like) of the operational portion, such as the clutch lever, clutch pedal and the like, is released during the disengaged state of the clutch apparatus 1, the first release lever 31 is pivotally moved about the fulcrum portion 41b toward the pressure plate 38 by means of the biasing force of the disc spring 33. Consequently, the first force-output portion 31c of the first release lever 31 thrusts the second protruding portion 38a of the pressure plate 38. Further, the first force-input portion 31a of the first release lever 31 thrusts the second force-output portion 35c of the second release lever 35 toward the pressure plate 38. Accordingly, the clutch apparatus 1 is switched to a half-engaged state, and then, to the engaged state. Herein, when the first force-input portion 31a of the first release lever 31 thrusts the second force-output portion 35c of the second release lever 35, the thrusting force of the assist spring 34 serves as a reaction force before the turnover point. However, after the turnover point, the thrusting force of the assist spring 34 serves as the assisting force of the thrusting force of the first force-input portion 31c of the first release lever 31. When the second force-output portion 35c of the second release lever 35 is thrust toward the pressure plate 38, the second release lever 35 is pivotally moved about the second supporting portion 35b. Consequently, the release bearing 7 is moved in the left direction of Fig. 7 by the second force-input portion 35a of the second release lever 35.

According to the second embodiment, similar effects to the first embodiment may be obtained. Further, the second supporting portion 35b of the second release lever 35 is displaced in the radial direction of the second release lever 35. Therefore, a lever ratio of the second release lever 35 is modified. Accordingly, a characteristic between a stroke and a load may be freely adjusted. Even when a different characteristic may be necessary for different types of vehicle, a required characteristic may be achieved only by modifying a small portion in accordance with the vehicle on which the clutch apparatus 1 is mounted.

### [Third embodiment]

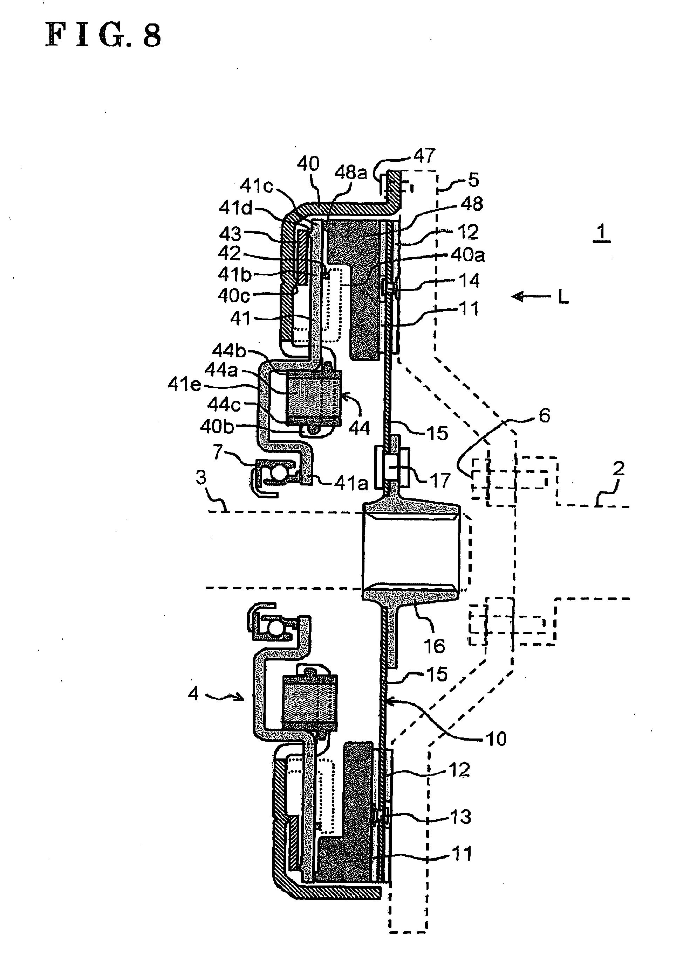

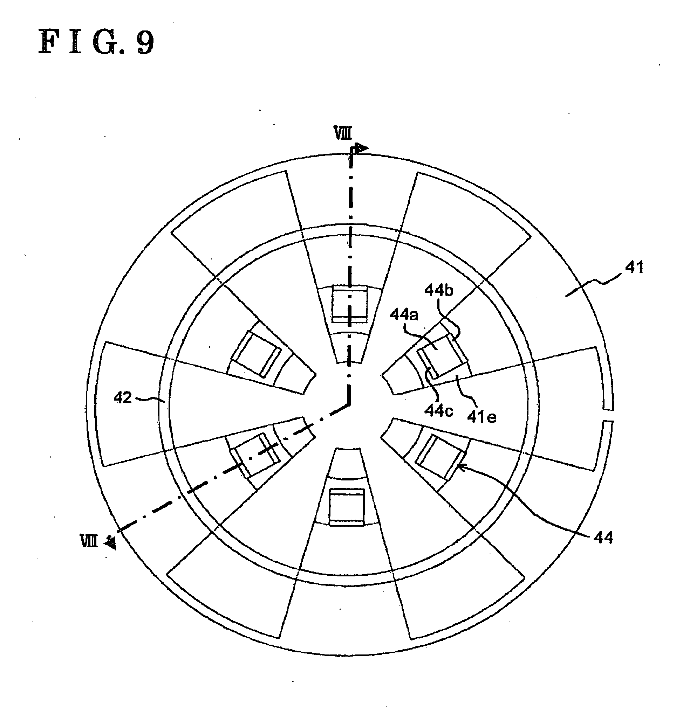

A clutch apparatus 1 according to a third embodiment will be described hereinafter with reference to the attached drawings. Fig. 8 is a cross-sectional view schematically illustrating a configuration of a clutch cover unit of the clutch apparatus 1 according to the third embodiment, taken along line VIII - VIII of Fig. 9. Fig. 9 is a planar view schematically illustrating the configuration of the clutch apparatus 1 according to the third embodiment, seen in an axial direction (in a direction L shown in Fig. 8). Fig. 8 illustrates the clutch apparatus 1 being in an engaged state. Fig. 9 only illustrates a release lever (a first release lever) 41, a supporting member 42 and an assist spring 44. In the third embodiment, configurations similar to the first embodiment may be referred to by the same reference numerals and a detailed description thereof will be omitted.

In the first embodiment, two release levers (the first release lever 21 and the second release lever 25) are provided within the clutch cover 20. However, in the third embodiment, only one release lever (the release lever 41) is provided within a clutch cover 40.

The clutch apparatus 1 connects and disconnects an input shaft 2 (for example, a crankshaft of an engine) and an output shaft 3 (for example, an input shaft of a transmission) so as to transmit and interrupt a transmission of power therebetween. The clutch apparatus 1 includes an assist mechanism 4 (the mechanism linked to an assist spring 44). The assist mechanism 4 is arranged within the clutch cover 40, which is rotated integrally with the input shaft 2, to assist an operational load. The clutch apparatus 1 is arranged on a power transmission path between the input shaft 2 and the output shaft 3, which are coaxially arranged relative to each other. The clutch apparatus 1 includes a flywheel 5, a release bearing 7, a clutch disc 10, the clutch cover 40, the release lever 41, a supporting member 42, a disc spring 43, the assist spring 44, and a pressure plate 48. The configuration of the flywheel 5, the release bearing 7 and the clutch disc 10 are the same as the first embodiment.

The clutch cover 40, formed into a substantially ring shape, pivotally supports the release lever 41. An outer portion of the clutch cover 40 in a radial direction thereof is fixed to the flywheel 5 by means of the second bolts 47 so as to be rotated integrally therewith. An inner portion of the clutch cover 40 in the radial direction thereof is spaced away from the flywheel 5. The clutch cover 40 includes a first supporting portion 40a at an intermediate portion of the clutch cover 40 in the radial direction thereof. The first supporting portion 40a supports the supporting member 42 for pivotally supporting a fulcrum portion 41b of the release lever 41. The clutch cover 40 further includes a second supporting portion 40b at an inner portion of the clutch cover 40 in the radial direction of thereof. The second supporting portion 40b supports a second seat 44c of the assist spring 44. The clutch cover 40 further includes a first protruding portion 40c for supporting an inner circumferential end of the disc spring 43. The clutch cover 40 is configured so as not to contact the release lever 41 and the assist spring 44 when the release lever 41 and the assist spring 44 are pivotally moved.

The release lever 41 is formed into a substantially ring shape. The release lever 41 is pivotally supported by the clutch cover 40. An outer portion of release lever 41 in the radial direction thereof is arranged between the pressure plate 48 and the disc spring 43. The release lever 41 includes a force-input portion (a first force-input point) 41a at an inner portion thereof in a radial direction thereof on a surface thereof facing the pressure plate 48. A thrusting force from the release bearing 7 is applied to the force-input portion 41a of the release lever 41. The release lever 41 further includes a first fulcrum portion (a first fulcrum point) 41b at an intermediate portion thereof in the radial direction thereof on a surface facing the pressure plate 48. The fulcrum portion 41b is pivotally supported by the supporting member 42. The release lever 41 further includes a force-output portion (a first force-output point) 41c at an outer portion thereof in the radial direction thereof. The force-output portion 41c contacts a second protruding portion 48a of the pressure plate 48. The release lever 41 further includes a third protruding portion 41d at an outer portion thereof in the radial direction thereof on the surface facing the pressure plate 48. The third protruding portion 41d is biased toward the pressure plate 48 by the disc spring 43. When the release lever 41 is biased by the disc spring 43, the inner portion of the release lever 41 in the radial direction thereof is pivotally moved about the fulcrum portion 41b in the opposite direction from the pressure plate 48, thereby biasing the second protruding portion 48a of the pressure plate 48 by the force-input portion 41c. On the other hand, when the force-input portion 41a of the release lever 41 is thrust by the release bearing 7, the inner portion of the release lever 41 in the radial direction thereof is pivotally moved about the fulcrum portion 41b toward the pressure plate 48, thereby compressing the disc spring 43. Consequently, the biasing of the second protruding portion 48a of the pressure plate 48 by the force-output portion 41c of the release lever 41 is released.

The release lever 41 includes a relief portion (a hole portion, a window portion) 41e. The relief portion 41e is formed so as not to contact the assist spring 44. The release lever 41 is pivotally supported by a first seat 44b of the assist spring 44. The release lever 41 receives a component of a thrusting force at least in the outer direction of the radial direction the release lever 41 from the assist spring 44 in accordance with an inclining degree of the assist spring 44. Therefore, when the force-input portion 41a of the release lever 41 is pivotally moved about the fulcrum portion 41b toward the flywheel 5 from a state where the release lever 41 (a line (a surface) connecting the fulcrum portion 41b and the force-output portion 41c) and a line (a surface) connecting the fulcrum portion 41b and the supporting portion of the second seat 44c correspond to each other (become parallel to each other) (a turnover point), a thrusting force of the assist spring 44 is applied to the release lever 41 so that the release lever 41 is pivotally moved toward the flywheel 5. On the other hand, when the force-input portion 41a of the release lever 41 is pivotally moved about the fulcrum portion 41b toward the release bearing 7 from a state where the release lever 41 (a line (a surface) connecting the fulcrum portion 41b and the force-output portion 41c) and a line (a surface) connecting the fulcrum portion 41b and the supporting portion of the second seat 44c correspond to each other (become parallel to each other) (a turnover point), a thrusting force of the assist spring 44 is applied to the release lever 41 so that the force-input portion 41a of the release lever 41 is pivotally moved toward the release bearing 7.

The supporting member 42 pivotally supports the release lever 41 at the fulcrum portion 41b. The supporting member 42 is supported by the first supporting portion 40a of the clutch cover 40.

The disc spring (a biasing member) 43, formed into a substantially coned shape, biases the release lever 41 so that the force-output portion 41c of the release lever 41 thrusts the pressure plate 48 toward the flywheel 5. The disc spring 43 is arranged between the clutch cover 40 and release lever 41. The inner circumferential end of the disc spring 43 is supported by the first protruding portion 40c of the clutch cover 40 and an outer circumferential end of the disc spring 43 thrusts the third protruding portion 41d of the release lever 41 toward the pressure plate 48. When the disc spring 43 biases the release lever 41, the force-input portion 41a of the release lever 41 is pivotally moved about the supporting point 41b toward the pressure plate 48.

The assist spring 44 for configuring the assist mechanism 4 assists an operational load that is applied to the force-input portion 41a of the release lever 41 against the biasing force of the disc spring 43. The assist spring 44 is arranged within the relief portion (the hole portion, the window portion) 41e of the release lever 41. The assist spring 44 is arranged between an outer wall portion of the relief portion 41e of the release lever 41 in the radial direction thereof and an inner portion of the release lever 41 (the supporting portion of a second seat 44c of the assist spring 44) so as to be expanded and compressed. The assist spring 44 applies a component of a biasing force at least in the outer direction of the radial direction of the release lever 41 to the outer wall portion of the relief portion 41e of the release lever 41 in accordance with an inclining degree of the assist spring 44. The assist spring 44 is configured by the first and second seats 44b and 44c and a spring 44a (for example, a coil spring or an elastic member) that is arranged between the first and second seats 44b and 44c. The first seat 44b pivotally supports the outer wall portion of the relief portion 41e of the release lever 41. The second seat 44c is pivotally supported by the second supporting portion 40b of the clutch cover 40. When the release bearing 7 thrusts the force-input portion 41a of the release lever 41 so that the force-input portion 41a of the release lever 41 is pivotally moved about the fulcrum portion 41b toward the flywheel 5 from a state where the release lever 41 (a line (a surface) connecting the force-input portion 41a and the force-output portion 41b) and a line (a surface) connecting the fulcrum portion 41b and the supporting portion of a second seat 44c correspond to each other (become parallel to each other) (a turnover point), the assist spring 44 assists the release lever 41 so that the release lever 41 is pivotally moved about the fulcrum portion 41b toward the disc spring 43.

The pressure plate 48 thrusts the clutch disc 10 toward the flywheel 5 so as to sandwich the clutch disc 10 between the pressure plate 48 and the flywheel 5, thereby frictionally-engaging the clutch disc 10 with the flywheel 5 so that the clutch disc 10 is rotated integrally with the flywheel 5. The pressure plate 48 is arranged to face the flywheel 5 via the clutch disc 10. The pressure plate 48 is connected to the clutch cover 40 by means of straps so as to be rotated integrally with the clutch cover 40. The pressure plate 48 includes the second protruding portion 48a, which the force-output portion 41c of the release lever 41 contact. When the pressure plate 48 is thrust toward the flywheel 5 by the release lever 41, the pressure plate 48 is press-fitted (or, slidably press-contacts, in a case where a thrusting force is small) with the first friction member 11.

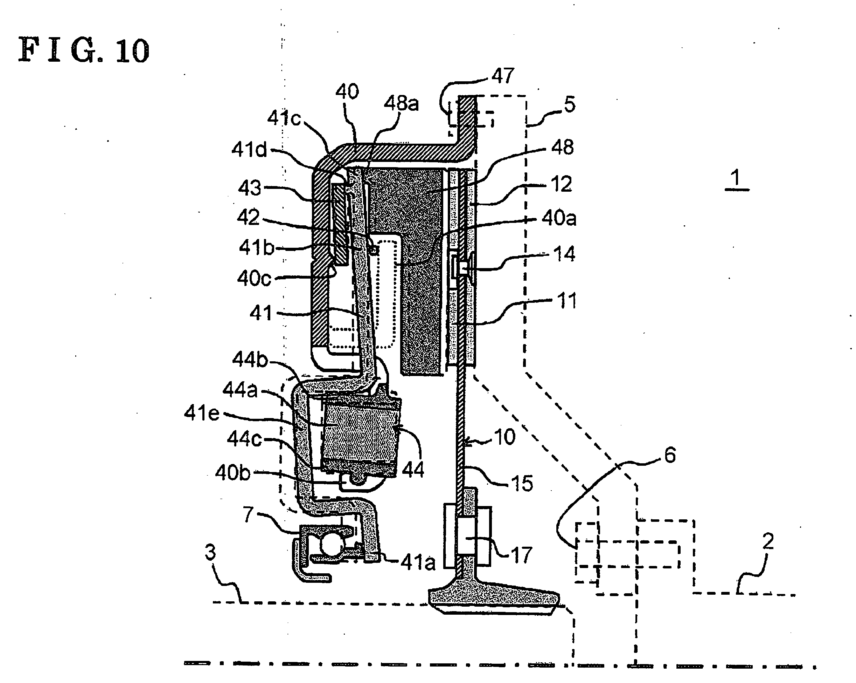

A movement of the clutch apparatus 1 according to the third embodiment will be described hereinafter with reference to the attached drawings. Fig. 10 is a diagram illustrating a movement of the clutch apparatus 1 according to the third embodiment. Fig. 10 illustrates the clutch apparatus 1 being in a disengaged state (a dashed line of Fig. 10 illustrates the engaged state of the clutch apparatus 1).

As illustrated in Fig. 8, in the engaged state of the clutch apparatus 1 (a state where the operational portion, such as the clutch lever, the clutch pedal, is not being operated), the pressure plate 48 is press-fitted with the clutch disc 10. Therefore, a rotational force is transmitted from the input shaft 2 to the output shaft 3. A press-fitting force is generated by the disc spring 43 and the assist spring 44. A load, generated by the disc spring 43, is transmitted to the pressure plate 48 via the release lever 41. A load, generated by the assist spring 44, is transmitted to the pressure plate 48 after a component of the load in a rotational direction of the release lever 41 about the fulcrum portion 41b is increased in accordance with a lever ratio of the release lever 41.

As illustrated in Fig. 10, when the operational portion, such as the clutch lever and the clutch pedal, is operated (a hand operation, foot operation and the like) during the engaged state of the clutch apparatus 1, the release bearing 7 is moved in a right direction of Fig. 10 by means of the hydraulic mechanism, the link mechanism and the like. Consequently, the force-input portion 41a of the release lever 41 is thrust toward the side of the input shaft 2 by the release bearing 7, thereby pivotally moving release lever 41 toward the disc spring 43 about the supporting portion 4 1 c. At the same time, the disc spring 43 is compressed, and the biasing of the second protruding portion 48a of the pressure plate 48 by the force-output portion 41c of the release lever 41 is released due to the principle of leverage. Consequently, the pressure plate 48 is moved in a left direction of Fig. 10, thereby releasing the pressure plate 48 from press-fitting to the clutch disc 10. Accordingly, the transmission of the rotational force from the input shaft 2 to the output shaft 3 is interrupted. As a result, the clutch apparatus 1 becomes the disengaged state. Herein, when the release bearing 7 thrusts the force-input portion 41a of the release lever 41, the thrusting force of the assist spring 44 serves as a reaction force against the thrusting force of the release bearing 7 until the release lever 41 (a line (a surface) connecting the fulcrum portion 41b and the force-output portion 41c) and a line (a surface) connecting the fulcrum portion 41b and the supporting portion of the second seat 44c of the assist spring 44 correspond to each other (become parallel to each other) (a turnover point). However, after the release lever 41 passes the turnover point, the thrusting force of the assist spring 44 serves as an assisting force of the release bearing 7. Therefore, after the force-output portion 41c of the release lever 41 is pivotally moved toward the disc spring 43 to pass the turnover point, a load on a clutch operational path at a position more downstream side than the release lever 41 may be reduced.

When an operation (a hand-operation, a foot-operation and the like) of the operational portion, such as the clutch lever, clutch pedal and the like, is released during the disengaged state of the clutch apparatus 1, the force-output portion 41c of the release lever 41 is pivotally moved about the fulcrum portion 41b toward the pressure plate 48 by means of the biasing force of the disc spring 43. Consequently, the force-output portion 41c of the release lever 41 thrusts the second protruding portion 48a of the pressure plate 48. Further, the force-input portion 41a of the release lever 41 thrusts the release bearing 7 toward the pressure plate 48, thereby moving the release bearing 7 in a left direction of Fig. 10. Accordingly, the clutch apparatus 1 is switched to a half-engaged state, and then, to the engaged state. Herein, when the force-input portion 41a of the release lever 41 thrusts the release bearing 7, the thrusting force of the assist spring 44 serves as a reaction force before the turnover point. However, after the turnover point, the thrusting force of the assist spring 44 serves as the assisting force of the thrusting force of the force-input portion 41a of the release lever 41.

According to the third embodiment, similar effects to the first embodiment may be obtained. Further, the number of components may be reduced.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A clutch apparatus (1) comprising:
a flywheel (5);
a pressure plate (28, 38, 48) arranged to face the flywheel (5);
a clutch disc (10) arranged between the flywheel (5) and the pressure plate (28, 38, 48);
a clutch cover (20, 30, 40) rotating integrally with the flywheel (5);
a first release lever (21, 31, 41) arranged between the pressure plate (28, 38, 48) and the clutch cover (20, 30, 40) and including a first force-input point (21a, 31a, 41a) applied with a load, a first fulcrum point (21b, 31b, 41b), at which the first release lever (21, 31, 41) is pivotally supported by the clutch cover (20, 30, 40), and a first force-output point (21c, 3 1 c, 41 c) for thrusting the pressure plate (28, 38, 48) toward the flywheel (5);
a biasing member (23, 33, 43) biasing the first release lever (21, 31, 41), thereby thrusting the pressure plate (28, 38, 49) toward the flywheel (5) by the first release lever (21, 31, 41) at the first force-output point (21c, 31c, 41c), **characterized by**
an assisting mechanism (4) arranged within the clutch cover (20, 30, 40) and assisting an operational load applied at the first force-input portion (21 a, 31 a, 41 a) of the first release lever (21, 31, 41) against a biasing force of the biasing member (23, 33, 43),
the first release lever (21, 31, 41) is formed into a substantially ring shape; and
the assisting mechanism (4) includes an assist spring (24, 34, 44), a first end of which is pivotally supported by the clutch cover (20, 30, 40) and the second end of which is pivotally supported by the first release lever (21, 31, 41), and which applies a biasing force to the first release lever (21, 31, 41) at least in an outer direction of the radial direction of the first release lever (21, 31, 41).

2. The clutch apparatus (1) according to Claim 1, further including
a second release lever (25, 35) including a second force-input point (25a, 35a) applied with an operational load from a release bearing (7), a second fulcrum point (25b, 35b), at which the second release lever (25, 35) is pivotally supported by the clutch cover (20, 30), and a second force-output point (25c, 35c) for thrusting the first force-input point (21a, 31a) of the first release lever (21, 31) in an opposite direction of a biasing direction of the biasing member (23, 33).

3. The clutch apparatus (1) according to Claim 2, wherein
the second fulcrum point (25b) of the second release lever (25) is arranged on the same circumference of a supporting portion where the first end of the assist spring (24) is pivotally supported by the clutch cover (20).

4. The clutch apparatus (1) according to Claim 2, wherein
the second fulcrum point (35b) of the second release lever (35) is arranged at a position being more distant from an axis of the clutch cover (30) than a supporting portion where the first end of the assist spring (24, 34) is pivotally supported by the clutch cover (30).

5. The clutch apparatus (1) according to Claim 1, wherein
an operational load from a release bearing (7) is applied to the first force-input point (41a) of the first release lever (41);
the first release lever (41) includes a relief portion (41e), which is formed not to contact the assist spring (44), at an intermediate portion of the first release lever (41) in a radial direction thereof;
the second end of the assist spring (44) is pivotally supported at the relief portion (41e) of the release lever (41); and wherein
the first fulcrum point (41b) of the first release lever (41) is arranged at a position being more distant from an axis of the clutch cover (40) than a supporting portion where the first end of the assist spring (44) is pivotally supported by the clutch cover (40).

## Patentansprüche

1. Kupplungsvorrichtung (1) mit
einem Schwungrad (5),
einer Druckplatte (28, 38, 48), die derart angeordnet ist, dass sie dem Schwungrad (5) zugewandt ist,
einer Kupplungsscheibe (10), die zwischen dem Schwungrad (5) und der Druckplatte (28, 38, 48) angeordnet ist,
einem Kupplungsdeckel (20, 30, 40), der integral mit dem Schwungrad (5) dreht,
einem ersten Ausrückhebel (21, 31, 41), der zwischen der Druckplatte (28, 38, 48) und dem Kupplungsdeckel (20, 30, 40) angeordnet ist und eine erste Krafteingabestelle (21a, 31a, 41 a), die mit einer Last belastet ist, eine erste Stützstelle (21b, 31b, 41b), an der der erste Ausrückhebel (21, 31, 41) schwenkbar von dem Kupplungsdeckel (20, 30, 40) abgestützt wird, und eine erste Kraftausgabestelle (21c, 31c, 41c) zum Drücken der Druckplatte (28, 38, 48) in Richtung auf das Schwungrad (5) enthält,
einem Vorspannbauteil (23, 33, 43) zum Vorspannen des ersten Ausrückhebels (21, 31, 41), wodurch die Druckplatte (28, 38, 48) gegen das Schwungrad (5) von dem ersten Ausrückhebel (21, 31, 41) an der ersten Kraftausgabestelle (21c, 31c, 41c) gedrückt wird, **gekennzeichnet durch**
einen Unterstützungsmechanismus (4), der innerhalb des Kupplungsdeckels (20, 30, 40) angeordnet ist und eine Betriebslast unterstützt, die an dem ersten Krafteingabebereich (21 a, 31a, 41a) des ersten Ausrückhebels (21, 31, 41) gegen eine Vorspannkraft des Vorspannbauteils (23, 33, 43) aufgebracht wird,
wobei der erste Ausrückhebel (21, 31, 41) in im Wesentlichen ringförmiger Gestalt ausgebildet ist und der Unterstützungsmechanismus (4) eine Unterstützungsfeder (24, 34, 44) enthält, wobei ein erstes Ende der Unterstützungsfeder von dem Kupplungsdeckel (20, 30, 40) schwenkbar abgestützt wird und das zweite Ende der Unterstützungsfeder von dem ersten Ausrückhebel (21, 31, 41) schwenkbar abgestützt wird, und die eine Vorspannkraft auf den ersten Ausrückhebel (21, 31, 41) zumindest in einer äußeren Richtung der radialen Richtung des ersten Ausrückhebels (21, 31, 41) ausübt.

2. Kupplungsvorrichtung (1) nach Anspruch 1, weiter enthaltend
einen zweiten Ausrückhebel (25, 35), der eine zweite Krafteingabestelle (25a, 35a), die mit einer Betriebslast von einem Ausrücklager (7) beaufschlagt ist, eine zweite Stützstelle (25b, 35b), an der der zweite Ausrückhebel (25, 35) schwenkbar von dem Kupplungsdeckel (20, 30) abgestützt wird, und eine zweite Kraftausgabestelle (25c, 35c) zum Drücken der ersten Krafteingabestelle (21a, 31a) des ersten Ausrückhebels (21, 31) in entgegengesetzter Richtung der Vorspannrichtung des Vorspannbauteils (23, 33) drückt.

3. Kupplungsvorrichtung (1) nach Anspruch 2, wobei
die zweite Stützstelle (25b) des zweiten Ausrückhebels (25) an dem gleichen Umfang eines Stützbereiches angeordnet ist, wo das erste Ende der Unterstützungsfeder (24) schwenkbar von dem Kupplungsdeckel (20) gestützt wird.

4. Kupplungsvorrichtung (1) nach Anspruch 2, wobei
die zweite Stützstelle (35b) des zweiten Ausrückhebels (35) an einer Stelle angeordnet ist, die von einer Achse des Kupplungsdeckels (30) weiter entfernt ist als ein Stückbereich, wo das erste Ende der Unterstützungsfeder (24, 34) schwenkbar von dem Kupplungsdeckel (30) gestützt wird.

5. Kupplungsvorrichtung (1) nach Anspruch 1, wobei
eine Betriebslast von einem Ausrücklager (7) auf die erste Krafteingabestelle (41a) des ersten Ausrückhebels (41) aufgebracht wird,
der erste Ausrückhebel (41) einen Entlastungsbereich (41e), der derart ausgebildet ist, dass er die Unterstützungsfeder (44) nicht berührt, an einem Zwischenbereich des ersten Ausrückhebels (41) in dessen radialer Richtung enthält,
das zweite Ende der Unterstützungsfeder (44) schwenkbar an dem Entlastungsbereich (41e) des Ausrückhebels (41) abgestützt ist, und wobei
die erste Stützstelle (41b) des ersten Ausrückhebels (41) an einer Stelle angeordnet ist, die von einer Achse des Kupplungsdeckels (40) weiter entfernt ist als ein Stützbereich, an dem das erste Ende der Unterstützungsfeder (44) schwenkbar von dem Kupplungsdeckel (40) abgestützt wird.

## Revendications

1. Dispositif d'embrayage (1) comportant :
un volant (5) ;
un plateau de pression (28, 38, 48) disposé pour faire face au volant (5) ;
un disque d'embrayage (10) disposé entre le volant (5) et le plateau de pression (28, 38, 48) ;
un couvercle d'embrayage (20, 30, 40) tournant entièrement avec le volant (5),
un premier levier de débrayage (21, 31, 41) disposé entre le plateau de pression (28, 38, 48) et le couvercle d'embrayage (20, 30, 40) et comprenant un premier point d'application de force en entrée (21 a, 31 a, 41 a) sollicité avec une charge, un premier point de pivotement (21b, 31 b, 41b), auquel le premier levier de débrayage (21, 31, 41) est supporté de manière pivotante par le couvercle d'embrayage (20, 30, 40), et un premier point d'application de force en sortie (21 c, 31 c, 41 c) afin de pousser le plateau de pression (28, 38, 48) dans la direction du volant (5) ;
un organe de poussée (23, 33, 43) sollicitant le premier levier de débrayage (21, 31, 41), poussant le plateau de pression (28, 38, 48) dans la direction du volant (5) par l'intermédiaire du premier levier de débrayage (21, 31, 41) au premier point d'application de force en sortie (21c, 31 c, 41c), **caractérisé en ce que**
un mécanisme d'assistance (4) disposé à l'intérieur du couvercle d'embrayage (20, 30, 40) et assistant d'une charge de fonctionnement appliquée à la première portion d'application de force en sortie (21 a, 31 a, 41 a) le premier levier de débrayage (21, 31, 41) contre la force de poussée de l'organe de poussée (23, 33, 43), dans lequel
le premier levier de débrayage (21, 31, 41) est en grande partie en forme d'anneau ; et
le mécanisme d'assistance (4) comprend un ressort d'assistance (24, 34, 44), dont une première extrémité est supportée de manière pivotante par le couvercle d'embrayage (20, 30, 40) et dont la seconde extrémité est supportée de manière pivotante par le premier levier de débrayage (21, 31, 41), et qui applique une force de poussée au premier levier de débrayage (21, 31, 41) dans au moins une direction extérieure à la direction radiale du premier levier de débrayage (21, 31, 41).

2. Dispositif d'embrayage (1) selon la revendication 1, comprenant en plus un deuxième levier de débrayage (25, 35) comprenant un deuxième point d'application de force en entrée (25a, 35a) auquel est appliquée une charge de fonctionnement par une butée de débrayage (7), un deuxième point de pivotement (25b, 35b), auquel le deuxième levier de débrayage (25, 35) est supporté de manière pivotante par le couvercle d'embrayage (20, 30), et un second point d'application de force en sortie (25c, 35c) pour pousser le premier point d'application de force en entrée (21 a, 31 a) du premier levier (21, 31) dans une direction opposée à la direction de poussée de l'organe de poussée (23, 33).

3. Dispositif d'embrayage (1) selon la revendication 2, dans lequel
le deuxième point de pivotement (25b) du deuxième levier de débrayage (25) est disposé sur la même circonférence qu'une portion de support où la première extrémité du ressort d'assistance (24) est supportée de manière pivotante par le couvercle d'embrayage (20).

4. Dispositif d'embrayage (1) selon la revendication 2, dans lequel
le deuxième point de pivotement (35b) du deuxième levier d'embrayage (35) est disposé dans une position qui est plus éloignée d'un axe du couvercle d'embrayage (30) que d'une portion de support où la première extrémité du ressort d'assistance (24, 34) est supportée de manière pivotante par le couvercle d'embrayage (30).

5. Dispositif d'embrayage (1) selon la revendication 1, dans lequel
une charge de fonctionnement d'une butée de débrayage (7) est appliquée au premier point d'application de force en entrée (41 a) du premier levier de débrayage (41) ;
le premier levier de débrayage (41) comprend une portion d'assistance (41e), formée pour ne pas être en contact avec le ressort d'assistance (44), sur une portion intermédiaire du premier levier de débrayage (41) dans une direction radiale à celui-ci ;
la deuxième extrémité du ressort d'assistance (44) est supportée de manière pivotante à la portion d'assistance (41e) du premier levier de débrayage (41) ; et dans lequel
le premier point de pivotement (41b) du premier levier de débrayage (41) est disposé à une position plus éloignée d'un axe du couvercle d'embrayage (40) que d'une portion de support où la première extrémité du ressort d'assistance (44) est supportée de manière pivotante par le couvercle d'embrayage (40).
